# EUROPÄISCHE PATENTSCHRIFT

(11) **EP 3 560 801 B1**
(45) Veröffentlichungstag und Bekanntmachung des Hinweises auf die Patenterteilung: **06.01.2021**
(21) Anmeldenummer: 19166529.8
(22) Anmeldetag: 01.04.2019
(51) Int. Cl.: B62D 33/06, B62D 51/02

(54) **LAGERTECHNIKFAHRZEUG MIT AKTIVER ANPASSUNG DER EINSTIEGSHÖHE**
STORAGE VEHICLE WITH ACTIVE ADAPTING OF THE ENTRY HEIGHT
VÉHICULE DE TECHNIQUE D'ENTREPOSAGE À AJUSTEMENT ACTIF DE LA HAUTEUR D'ENTRÉE

(30) Priorität: 26.04.2018 DE 102018110059
(43) Veröffentlichungstag der Anmeldung: 30.10.2019
(73) Patentinhaber: Linde Material Handling GmbH, 63743 Aschaffenburg (DE)
(72) Erfinder: BERTIN, Céderic, 86130 Jaunay Clan (FR); FOUHAMI, Zakaria, 86100 Chatellerault (FR)
(74) Vertreter: Patentship Patentanwaltsgesellschaft mbH

(56) Entgegenhaltungen:
- EP-A1- 3 222 491
- EP-A2- 1 731 477
- DE-A1- 4 401 257
- DE-A1-102009 014 391
- DE-A1-102009 058 598
- DE-A1-102009 058 599
- JP-A- 2002 145 073

## Beschreibung

Die Erfindung betrifft ein Lagertechnikfahrzeug, insbesondere einen Hubwagen, mit einem eine Fahrerstandplattform umfassenden Fahrerplatzmodul, das an einem Rahmen des Lagertechnikfahrzeugs vertikal beweglich aufgehängt ist, wobei zwischen dem Fahrerplatzmodul und dem Rahmen mindestens eine Feder- und/oder Dämpfereinrichtung angeordnet ist, die eine elastische Aufhängung des Fahrerplatzmoduls mit veränderlicher Bodenfreiheit ermöglicht.

Lagertechnikfahrzeuge können als Flurförderzeuge für den reinen Mitfahrbetrieb ausgeführt sein oder als Flurförderzeuge, die sowohl für einen Mitgängerbetrieb als auch für einen Mitfahrerbetrieb geeignet sind. Derartige Lagertechnikfahrzeuge sind beispielsweise als Niederhubwagen, Hochhubwagen, Niederhubkommissionierer oder Schlepper ausgebildet. Lagertechnikfahrzeuge, die sowohl für den Mitgängerbetrieb als auch für den Mitfahrerbetrieb geeignet und ausgelegt sind, sind mit einer klappbaren Fahrerstandplattform versehen, die sich im Mitgängerbetrieb in einer eingeklappten Stellung befindet und für den Mitfahrerbetrieb ausgeklappt werden kann.

Bei Lagertechnikfahrzeugen für den reinen Mitfahrbetrieb ist für die Bedienperson eine als Fahrerstandplattform ausgebildete Fahrerplattform vorgesehen, wobei bereits Lösungen bekannt sind, die Fahrerstandplattform gefedert am Fahrzeugrahmen abzustützen. Ein derartiges Lagertechnikfahrzeug für den reinen Mitfahrerbetrieb mit einer gefederten Fahrerstandplattform ist beispielsweise aus der DE 100 55 263 A1 bekannt. Die übrigen Bestandteile eines Fahrerarbeitsplatzes, beispielsweise eine von einer Lenkdeichsel gebildete Bedieneinrichtung sind mit dem Fahrzeugrahmen fest und ungedämpft verbunden, so dass Erschütterungen, Vibrationen und Schwingungen im Betrieb des Lagertechnikfahrzeugs auf die Bedienperson übertragen werden und die Bedienperson entsprechenden Erschütterungen und Schwingungen ausgesetzt ist.

Aus der DE 10 2009 058 598 A1 ist ein Lagertechnikfahrzeug bekannt, bei dem das Fahrerplatzmodul mittels einer Doppellenkerführung, insbesondere einer Parallelogrammaufhängung, an dem Rahmen aufgehängt ist und zwischen dem Fahrerplatzmodul und dem Rahmen eine Feder- und/oder Dämpfereinrichtung angeordnet ist. Die Lehre dieser Druckschrift besteht somit darin, das Fahrerplatzmodul mittels einer Doppellenkerführung, insbesondere einer Parallelogrammaufhängung, am Fahrzeugrahmen anzulenken, wobei zur schwingungstechnischen Entkopplung des Fahrerarbeitsplatzes vom Rahmen zwischen dem Rahmen und dem Fahrerplatzmodul eine Feder- und/oder Dämpfereinrichtung angeordnet ist. Mit einer beispielsweise als Parallelogrammaufhängung ausgebildeten Doppellenkerführung kann ein quasi vertikaler Freiheitsgrad und somit eine vertikale Bewegbarkeit mit einer definierten Amplitude des Fahrerplatzmoduls erzielt werden. Hierdurch kann das Fahrerarbeitsplatzmodul von dem Rahmen des Lagertechnikfahrzeugs schwingungstechnisch entkoppelt und in Verbindung mit der Feder- und/oder Dämpfereinrichtung gefedert/gedämpft am Rahmen aufgehängt werden, so dass eine Übertragung von Erschütterungen, beispielsweise beim Überfahren von Bodenunebenheiten, sowie von Schwingungen und Vibrationen im Betrieb des Lagertechnikfahrzeugs auf die auf der Fahrerstandplattform stehende Bedienperson vermieden werden. Die durch die beispielsweise als Parallelogrammaufhängung ausgebildete Doppellenkerführung des Fahrerplatzmoduls erzielbare vertikale Bewegung des Fahrerplatzmoduls bei einer Federungsbewegung wird hierbei von einer auf der Fahrerstandplattform stehenden Bedienperson als besonders angenehm und ergonomisch empfunden. Das Lagertechnikfahrzeug weist hierdurch eine verbesserte Ergonomie und einen verbesserten Komfort für die Bedienperson auf.

Die Integration eines Federungs- und/oder Dämpfungssystems in Lagertechnikfahrzeugen für die gefederte Aufhängung der Fahrerstandplattform bzw. des Fahrerplatzmoduls resultiert in der Regel in einer Erhöhung der Einstiegshöhe für den Fahrer. Aufgrund der notwendigen Federwege muss eine ausreichende Bodenfreiheit des Fahrerplatzmoduls gewährleistet sein. Insbesondere im Kommissionierbetrieb, bei dem der Fahrer zur Erledigung der zahlreichen Kommissioniervorgänge häufig ein- und aussteigen muss, ist eine solche Erhöhung der Einstiegshöhe von Nachteil. Die Fahrer bevorzugen aus Komfortgründen und zur Verringerung der Stolpergefahr Lagertechnikfahrzeuge mit niedrigen Einstiegshöhen.

Der vorliegenden Erfindung liegt die Aufgabe zugrunde, ein Lagertechnikfahrzeug der eingangs genannten Art so auszugestalten, dass trotz Integration eines Federungs-und/oder Dämpfungssystems für die gefederte Aufhängung der Fahrerstandplattform bzw. des Fahrerplatzmoduls eine niedrige Einstiegshöhe ermöglicht wird.

Diese Aufgabe wird erfindungsgemäß dadurch gelöst, dass eine Höhenverstelleinrichtung mit einer Eingriffsmöglichkeit in die elastische Aufhängung vorgesehen ist, die im Eingriff die Bodenfreiheit aktiv verringert.

Mit dieser Höhenverstelleinrichtung ist eine aktive Beeinflussung der Bodenfreiheit und damit der Einstiegshöhe des Fahrerplatzmoduls möglich. So kann die Bodenfreiheit des Fahrerplatzmoduls insbesondere nach dem Anhalten des Lagertechnikfahrzeugs und somit im Fahrzeugstillstand aktiv verringert und dadurch die Einstiegshöhe für den Fahrer gesenkt werden. Der Fahrer kann also beim Stillstand des Lagertechnikfahrzeugs bequem ein- und aussteigen. Beim Anfahren des Lagertechnikfahrzeugs und somit im Fahrbetrieb des Fahrzeugs kann die Bodenfreiheit des Fahrerplatzmoduls wieder erhöht werden, so dass dem Federungs- und/oder Dämpfungssystem genügend Federweg zur Verfügung gestellt wird.

Vorzugsweise umfasst die Höhenverstelleinrichtung einen Antrieb, der im Eingriff eine kraftschlüssige Verbindung zwischen dem Rahmen des Lagertechnikfahrzeugs und dem Fahrerplatzmodul herstellt.

Dabei weist der Antrieb zweckmäßigerweise einen Aktuator, insbesondere eine ausfahrbare Kolbenstange, auf, der im Eingriff das Fahrerplatzmodul in Richtung auf den Boden drückt.

Bevorzugt ist der Antrieb am Rahmen befestigt, während der Aktuator im aktivierten Zustand, insbesondere im ausgefahrenen Zustand, mit einem Abstützelement in Wirkverbindung gelangt, das am Fahrerplatzmodul befestigt ist. Der Aktuator stützt sich also zwischen Rahmen und Fahrerplatzmodul ab und drückt im aktivierten, beispielsweise ausgefahrenen Zustand, das vertikal beweglich am Rahmen aufgehängte Fahrerplatzmodul nach unten. Im deaktivierten Zustand, beispielsweise eingefahrenen Zustand, steht dagegen der Aktuator nicht im Eingriff mit dem Abstützelement, so dass die freien Federungs- und/oder Dämpfungseigenschaften der Feder- und/oder Dämpfereinrichtung erhalten bleiben.

Denkbar ist auch eine umgekehrte Anordnung von Antrieb und Abstützelement, bei der der Antrieb am Fahrerplatzmodul befestigt ist und der Aktuator im aktivierten Zustand mit einem Abstützelement in Wirkverbindung gelangt, das am Rahmen des Lagertechnikfahrzeugs befestigt ist. Die prinzipielle Funktionsweise ist damit dieselbe.

In einer vorteilhaften Ausgestaltung der Erfindung ist der Antrieb als Linearantrieb ausgebildet. Unter einem Linearantrieb versteht man einen Antrieb, der eine translatorische Bewegung eines Antriebselements in gerader Linie oder einem anderen vorgegebenen Verlauf bewirkt. Dabei kann der Linearantrieb beispielsweise einen Kugelgewindetrieb (Gewindestangenantrieb), Rollengewindetrieb, Planetenrollengewindetrieb, Hydraulikzylinder oder Pneumatikzylinder aufweisen. Denkbar sind auch elektromechanische Linearantriebe sowie Linearaktoren mit piezoelektrischem, elektrostatischem, elektromagnetischem, magnetostriktivem oder thermoelektrischem Wirkprinzip.

Eine andere Variante der Erfindung sieht vor, dass der Antrieb als Exzenterantrieb ausgebildet ist. Ein Exzenterantrieb weist eine auf einer Antriebswelle angebrachte Steuerungsscheibe auf, deren Mittelpunkt außerhalb der Wellenachse liegt. Auf diese Weise können rotatorische (Dreh-) in translatorische (Längen-) Bewegungen umgewandelt werden.

In einer besonders bevorzugten Ausführungsform ist der Antrieb als hydraulischer Antrieb ausgebildet. Dabei wird primärseitig die mechanische Leistung einer Kraftmaschine (z.B. Elektromotor oder Verbrennungsmotor) durch eine Pumpe in hydraulische Leistung umgewandelt. Diese Leistung wird in einem Hydraulikzylinder oder einem Hydraulikrotor wieder in mechanische Leistung umgeformt und zwar im Hydraulikzylinder in eine lineare Bewegung oder im Hydraulikrotor in eine Drehbewegung.

Zur Betätigung der Höhenverstelleinrichtung ist zweckmäßigerweise vorgesehen, dass die Höhenverstelleinrichtung mit einer Bedieneinrichtung im Bereich des Fahrerplatzmoduls in Wirkverbindung steht. Auf diese Weise kann der Fahrer nach dem Anhalten des Lagertechnikfahrzeugs über die Bedieneinrichtung das Absenken des Fahrerplatzmoduls bewirken, so dass ein bequemes Ein- und Aussteigen gewährleistet ist.

Gemäß einer Weiterbildung der Erfindung steht die Höhenverstelleinrichtung mit einer Steuerungseinrichtung in Wirkverbindung. Die Steuerungseinrichtung ist dazu eingerichtet, im Stillstand des Lagertechnikfahrzeugs automatisch einen Steuerungsbefehl an die Höhenverstelleinrichtung auszugeben, die Bodenfreiheit zu verringern. Somit ist gewährleistet, dass im Stillstand des Lagertechnikfahrzeugs das Fahrerplatzmodul zum leichteren Ein- und Aussteigen automatisch abgesenkt ist, ohne dass der Fahrer sich darum kümmern muss. Die Steuerungseinrichtung ist weiterhin dazu eingerichtet, im Fahrbetrieb des Lagertechnikfahrzeugs einen Steuerungsbefehl an die Höhenverstelleinrichtung auszugeben, die Bodenfreiheit zu erhöhen. Die Steuerungseinrichtung kann hierzu mit einem vom Fahrer zu betätigenden Fahrgeber in Verbindung stehen, um bei unbetätigtem Fahrgeber den Stillstand des Lagertechnikfahrzeugs und bei betätigtem Fahrgeber den Fahrbetrieb des Lagertechnikfahrzeugs zu detektieren. Alternativ kann die Steuereinrichtung zur Ermittlung des Stillstands oder des Fahrbetriebs mit einer Sensoreinrichtung in Verbindung stehen, beispielsweise einem die Fahrgeschwindigkeit oder die Drehzahl eines Fahrmotors erfassenden Sensor.

Dabei ist die Steuerungseinrichtung zweckmäßigerweise in eine Fahrzeugsteuerung integriert. Damit stehen die Fahrzeugbetriebsdaten unmittelbar zur gezielten Ansteuerung der Höhenverstelleinrichtung zur Verfügung. So kann beispielsweise bereits beim Abbremsen des Lagertechnikfahrzeugs bis zum Stillstand das Absenken des Fahrerplatzmoduls eingeleitet werden. Andererseits kann bereits bei Ausgabe des Steuerungsbefehls der Fahrzeugsteuerung zum Anfahren des Lagertechnikfahrzeugs das Fahrerplatzmodul wieder automatisch angehoben werden.

Mit Vorteil ist das Fahrerplatzmodul mittels einer Doppellenkerführung, insbesondere einer Parallelogrammaufhängung, an dem Rahmen aufgehängt.

Die Feder- und/oder Dämpfereinrichtung kann bevorzugt mit einer in vertikaler Richtung verlaufenden Wirkrichtung zwischen dem Fahrerplatzmodul und dem Rahmen angeordnet. Mit einer derartigen Orientierung der Feder- und/oder Dämpfereinrichtung können Schwingungen, Vibrationen und Erschütterungen in Verbindung mit der als Parallelogrammaufhängung ausgebildeten Doppellenkerführung des Fahrerplatzmoduls auf einfache Weise von dem Fahrerplatzmodul ferngehalten werden.

Gemäß einer anderen Ausgestaltung ist die Feder- und/oder Dämpfereinrichtung mit einer in vertikaler Richtung geneigten, insbesondere in einer von dem Rahmen zu dem Fahrerplatzmodul ansteigenden, Wirkrichtung zwischen dem Fahrerplatzmodul und dem Rahmen angeordnet. Mit einer derartigen Orientierung der Feder- und/oder Dämpfereinrichtung ergeben sich zusätzliche Vorteile, da sowohl Schwingungen, Vibrationen und Erschütterungen in vertikaler Richtung als auch Schwingungen, Vibrationen und Erschütterungen in horizontaler und somit in Fahrzeuglängsrichtung von dem Fahrerplatzmodul ferngehalten werden können.

Sofern der Rahmen von einem Antriebsteil des Lagertechnikfahrzeugs gebildet ist, ist zweckmäßigerweise an den Seitenteilen des Antriebsteils jeweils eine Doppellenkerführung, insbesondere eine Parallelogrammaufhängung, angeordnet. Hierdurch kann eine einfache konstruktive Ausführungsform mit einem geringen Bauraumbedarf und Platzbedarf für die bevorzugt als Parallelogrammaufhängung ausgebildete Doppellenkerführung erzielt werden.

Die Doppellenkerführung und somit Parallelogrammaufhängung ist vorteilhafterweise von jeweils zwei Streben gebildet, die jeweils an dem Fahrerplatzmodul und an dem Rahmen um eine in Fahrzeugquerrichtung angeordnete horizontale Schwenkachse gelenkig angelenkt sind.

Die Fahrerstandplattform kann gemäß einer Ausführungsform der Erfindung an dem Fahrerplatzmodul fest angeordnet sein. Das Lagertechnikfahrzeug ist hierbei beispielsweise als Hubwagen, Kommissionierer oder Schlepper für den reinen Mitfahrerbetrieb ausgebildet.

Es ist ebenfalls möglich, die Fahrerstandplattform an dem Fahrerplatzmodul um eine im Wesentlichen horizontale Schwenkachse klappbar anzuordnen, so dass sich das Lagertechnikfahrzeug sowohl für einen Mitgängerbetrieb, bei dem sich die Fahrerstandplattform in einer eingeklappten Stellung befindet, als auch für einen Mitfahrerbetrieb, bei dem sich die Fahrerstandplattform in einer ausgeklappten Stellung befindet, eignet.

Bei einer derartigen Ausbildung des Fahrerplatzmoduls mit einer klappbaren Fahrerstandplattform kann das Fahrerplatzmodul mindestens einen klappbaren und/oder höhenverstellbaren Seitenbügel aufweisen.

Bei der Ausbildung des Fahrerplatzmoduls mit einer starren Fahrerstandplattform kann das Fahrerplatzmodul mindestens eine Seitenwand bzw. eine kombinierte Seiten- und Rückwand aufweisen, um der Bedienperson zusätzlichen Halt im Betrieb des Lagertechnikfahrzeugs zu bieten.

Sowohl bei der Ausstattung des Fahrerplatzmoduls mit einer festen als auch mit einer klappbaren Fahrerstandplattform kann entweder nur die Fahrerstandplattform selbst mit der Feder- und/oder Dämpfereinrichtung versehen sein oder das gesamte Fahrerplatzmodul.

Das Fahrerplatzmodul weist in einer vorteilhaften Ausgestaltung eine Fahrbedieneinrichtung, insbesondere eine Lenkereinrichtung oder eine Lenkdeichsel, und/oder eine Anlehnhilfe für den Fahrer auf. In diesem Fall kann der Komfort für den Fahrer dadurch weiter verbessert werden, dass das gesamte Fahrerplatzmodul und somit auch die Fahrbedieneinrichtung gefedert und/oder gedämpft ist. Dadurch ist die Bedieneinrichtung über das Fahrerplatzmodul schwingungstechnisch von dem Rahmen entkoppelt. Zudem kann an dem Fahrerplatzmodul eine Anzeigeeinrichtung, beispielsweise ein Display, und ein Notausschalter angeordnet werden, so dass das Fahrerplatzmodul mit allen Bedien- und Anzeigeeinrichtungen des Lagertechnikfahrzeugs versehen ist.

Die Feder- und/oder Dämpfereinrichtung kann gemäß einer bevorzugten Ausgestaltungsform der Erfindung von zumindest einer Feder, beispielsweise einer Gasdruckfeder, oder einem Gummielement oder einem Kunststoffelement oder einem Luftfederelement oder einem Silikongelelement oder einer Kombination der genannten Einrichtungen gebildet sein.

Weitere Vorteile und Einzelheiten der Erfindung werden anhand der in den schematischen Figuren dargestellten Ausführungsbeispiele näher erläutert. Hierbei zeigen
Figur 1 ein erfindungsgemäßes Lagertechnikfahrzeug im Fahrbetrieb und
Figur 2 das erfindungsgemäße Lagertechnikfahrzeug im Stillstand.

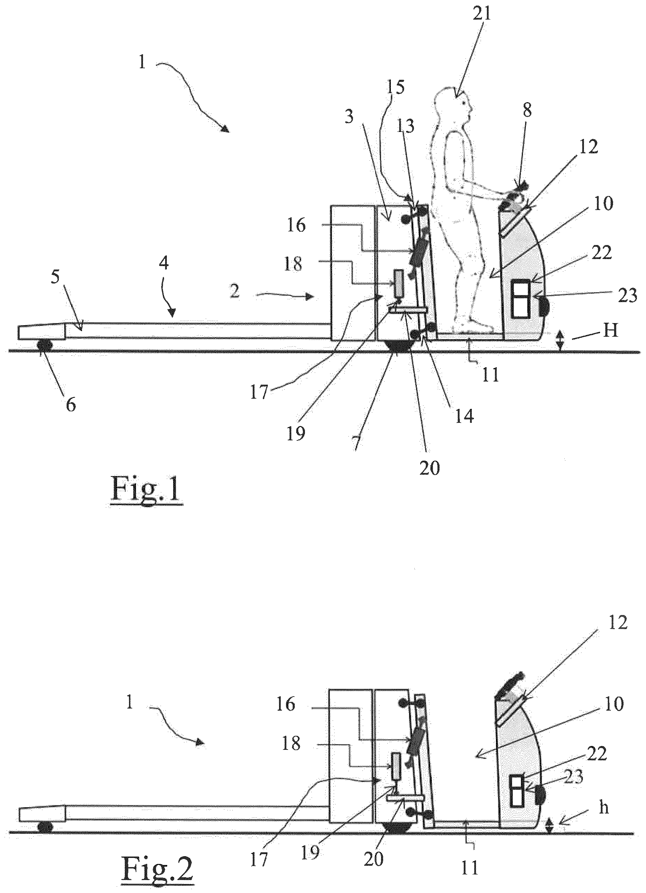

In der Figur 1 ist ein im vorliegenden Beispiel als lenker- oder deichselgeführter Hubwagen ausgebildetes Lagertechnikfahrzeug 1 in der Seitenansicht dargestellt. Das Lagertechnikfahrzeug 1 weist einen mit einem tragenden Rahmen 3 versehenen Antriebsteil 2 und einen mittels einer nicht näher dargestellten Hubeinrichtung relativ zu dem Antriebsteil 2 anhebbaren und absenkbaren Lastteil 4 auf. Der Lastteil 4 umfasst eine von beispielsweise zwei seitlich beabstandeten Lastarmen 5 gebildete Lastgabel.

Mittels an den Spitzen der Lastarme 5 angeordneten Lastrollen 6 ist der Lastteil 4 auf einer Fahrbahn abgestützt.

In dem Antriebsteil 2 ist eine Fahrantriebseinheit untergebracht, die ein Antriebsrad 7 und einen das Antriebsrad 7 antreibenden elektrischen Fahrantriebsmotor umfasst, der in der Figur 1 nicht dargestellt ist. Das Antriebsrad 7 ist um eine vertikale Schwenkachse lenkbar ausgebildet. Die Fahrantriebseinheit umfasst weiterhin einen in der Figur 1 nicht gezeigten elektrischen Lenkmotor zum Lenken des Antriebsrades 7 um die vertikale Schwenkachse. Zur Versorgung der Fahrantriebseinheit und der Hubeinrichtung für den Lastteil 4 mit elektrischer Energie ist ein nicht näher dargestellter Batterieblock als Energieversorgungseinheit vorgesehen, der in einem Batteriefach des Antriebsteils 2 angeordnet ist. Das Lenken und die Bedienung des Lagertechnikfahrzeugs 1 durch den Fahrer 21 erfolgt mittels einer im vorliegenden Beispiel als Lenker ausgebildeten Bedieneinrichtung 8.

Das Lagertechnikfahrzeug 1 weist ein Fahrerplatzmodul 10 auf, das an dem Antriebsteil 2 gegenüberliegend zu dem Lastteil 3 angeordnet ist und an dem Rahmen 3 und somit an dem Antriebsteil 2 gefedert und/oder gedämpft aufgehängt ist. Das Fahrerplatzmodul 10 umfasst eine im unteren Bereich des Fahrerplatzmoduls 10 angeordnete Fahrerstandplattform 11. Das Fahrerplatzmodul 10 ist im dargestellten Ausführungsbeispiel weiterhin mit der als Lenker ausgebildeten Bedieneinrichtung 8 versehen, die im oberen Bereich des Fahrerplatzmoduls 10 angeordnet ist. Zusätzlich ist an dem Fahrerplatzmodul 10 eine Bedien- und/oder Anzeigeeinrichtung 12 angeordnet, die als Display und/oder Tastenfeld ausgebildet sein kann.

Die Fahrerstandplattform 11 ist in der dargestellten Ausführungsform an dem Fahrerplatzmodul 10 starr befestigt, so dass das Lagertechnikfahrzeug 1 für den reinen Mitfahrerbetrieb ausgelegt ist. Das Lagertechnikfahrzeug 1 könnte aber in einer nicht dargestellten Variante auch zum wahlweisen Betrieb im Mitgängerbetrieb und im Mitfahrerbetrieb ausgebildet sein. In diesem Fall wäre die Fahrerstandplattform 11 um eine im Wesentlichen horizontale und in Fahrzeugquerrichtung angeordnete Schwenkachse zwischen einer eingeklappten Stellung für den Mitgängerbetrieb und einer ausgeklappten Stellung für den Mitfahrerbetrieb klappbar an dem Fahrerplatzmodul 10 angeordnet.

Das Fahrerplatzmodul 10 ist an dem Rahmen 3 und somit dem Antriebsteil 2 mittels einer als Parallelogrammaufhängung 15 ausgebildeten Doppellenkerführung 15 aufgehängt, wobei die Lenker von einer oberen Strebe 13 und einer unteren Strebe 14 gebildet sind, die jeweils an dem Fahrerplatzmodul 10 und an dem Rahmen 3 um eine in Fahrzeugquerrichtung angeordnete Schwenkachse gelenkig gelagert sind.

Zwischen dem Fahrerplatzmodul 10 und dem Rahmen 3 ist eine Feder- und/oder Dämpfereinrichtung 16 angeordnet, mittels der das an der Parallelogrammaufhängung 15 an dem Rahmen 3 aufgehängte Fahrerplatzmodul 10 an dem Rahmen 3 gefedert und/oder gedämpft abgestützt ist. Die Wirklinie der Feder- und/oder Dämpfereinrichtung 16 ist im Wesentlichen in vertikaler Richtung angeordnet.

Zur aktiven Verringerung der Bodenfreiheit und damit der Einstiegshöhe des Fahrerplatzmoduls 10 ist erfindungsgemäß eine Höhenverstelleinrichtung 17 vorgesehen. Die Höhenverstelleinrichtung 17 umfasst einen Antrieb 18, der im Eingriff eine kraftschlüssige Verbindung zwischen dem Rahmen 3 und dem Fahrerplatzmodul 10 herstellt. Dabei weist der Antrieb 18 einen Aktuator 19 auf, der im Eingriff das Fahrerplatzmodul 10 in Richtung auf den Boden drückt. Der Aktuator 19 ist im dargestellten Ausführungsbeispiel als ausfahrbare Kolbenstange ausgebildet.

Der Antrieb 18 ist am Rahmen 3 befestigt, während der Aktuator 19 im aktivierten Zustand, beispielsweise mit ausgefahrener Kolbenstange, mit einem Abstützelement 20 in Wirkverbindung gelangt, das am Fahrerplatzmodul 10 befestigt ist. Der Aktuator 19 stützt sich also zwischen Rahmen 3 und Fahrerplatzmodul 10 ab und drückt das vertikal beweglich am Rahmen 3 aufgehängte Fahrerplatzmodul 10 nach unten. Im deaktivierten Zustand, beispielsweise mit eingefahrener Kolbenstange, steht dagegen der Aktuator 19 nicht im Eingriff mit dem Abstützelement 20, so dass die freien Federungs- und/oder Dämpfungseigenschaften der Feder- und/oder Dämpfereinrichtung 16 erhalten bleiben.

In der Figur 1 ist das Lagertechnikfahrzeug 1 im Fahrbetrieb dargestellt. Im Fahrbetrieb ist der Aktuator 19 deaktiviert, beispielsweise die Kolbenstange 19 des Antriebs 18 der Höhenverstelleinrichtung 17 eingefahren, und steht nicht im Eingriff mit dem Abstützelement 20. Die Feder- und Dämpfereinrichtung 16 ist daher voll funktionsfähig und stellt den komfortablen, schwingungs- und erschütterungsfreien Fahrbetrieb sicher. Zur Gewährleistung der hierzu erforderlichen Federwege ist dabei die Einstiegshöhe des Fahrerplatzmoduls 10 auf eine Höhe H angehoben.

Die Figur 2 zeigt dasselbe Lagertechnikfahrzeug 1 wie in Figur 1, aber im Stillstand. Dabei sind dieselben Merkmale mit denselben Bezugsziffern bezeichnet. Im Stillstand des Lagertechnikfahrzeugs 1 ist zum leichteren Ein- und Aussteigen das Fahrerplatzmodul 10 auf die Einstiegshöhe h abgesenkt, wobei die Einstiegshöhe h kleiner als die Einstiegshöhe H ist. Hierzu wird der Aktuator 19 aktiviert, beispielsweise die Kolbenstange des Antriebs 18 der Höhenverstelleinrichtung 17 ausgefahren, und in Eingriff mit dem Abstützelement 20 gebracht. Der Aktuator 19 drückt das Abstützelement 20 und damit das Fahrerplatzmodul 10 entgegen der Federkraft der Feder- und/oder Dämpfereinrichtung 16 nach unten, bis die gewünschte Einstiegshöhe h erreicht ist.

Zur Betätigung der Höhenverstelleinrichtung 17 kann die Höhenverstelleinrichtung 17 mit der Bedieneinrichtung 12 im Bereich des Fahrerplatzmoduls 10 in Wirkverbindung stehen. Auf diese Weise kann der Fahrer nach dem Anhalten des Lagertechnikfahrzeugs 1 über die Bedieneinrichtung 12 manuell das Absenken des Fahrerplatzmoduls 10 bewirken, so dass ein bequemes Ein- und Aussteigen gewährleistet ist.

Im vorliegenden Ausführungsbeispiel steht die Höhenverstelleinrichtung 17 für einen Automatikbetrieb mit einer Steuerungseinrichtung 22 in Wirkverbindung, die beispielsweise in die Fahrzeugsteuerung 23 integriert ist. Die Steuerungseinrichtung 22 gibt im Stillstand des Lagertechnikfahrzeugs 1 automatisch einen Steuerungsbefehl an die Höhenverstelleinrichtung 17 aus, die Bodenfreiheit zu verringern. Beim Anfahren des Lagertechnikfahrzeugs 1 wird dann die Bodenfreiheit wieder automatisch erhöht, indem ein entsprechender Steuerungsbefehl an die Höhenverstelleinrichtung 17 ausgegeben wird, die Bodenfreiheit zu erhöhen. Im Automatikbetrieb kann somit der Fahrer auf eine manuelle Betätigung über die Bedieneinrichtung 12 verzichten und die automatische Einstellung der Bodenfreiheit und somit der Einstiegshöhe h des Fahrerplatzmoduls 10 der Steuerungseinrichtung 22 überlassen. Somit ist gewährleistet, dass im Stillstand des Lagertechnikfahrzeugs 1 das Fahrerplatzmodul 10 mit der Fahrerstandplattform 11 zum leichteren Ein- und Aussteigen stets abgesenkt und im Fahrbetrieb zur Sicherstellung der erforderlichen Federwege stets angehoben ist, ohne dass der Fahrer sich darum kümmern muss.

## Patentansprüche

1. Lagertechnikfahrzeug, insbesondere Hubwagen, mit einem eine Fahrerstandplattform umfassenden Fahrerplatzmodul, das an einem Rahmen des Lagertechnikfahrzeugs vertikal beweglich aufgehängt ist, wobei zwischen dem Fahrerplatzmodul und dem Rahmen mindestens eine Feder- und/oder Dämpfereinrichtung angeordnet ist, die eine elastische Aufhängung des Fahrerplatzmoduls mit veränderlicher Bodenfreiheit ermöglicht, **dadurch gekennzeichnet, dass** eine Höhenverstelleinrichtung (17) mit einer Eingriffsmöglichkeit in die elastische Aufhängung vorgesehen ist, die im Eingriff die Bodenfreiheit aktiv verringert.

2. Lagertechnikfahrzeug nach Anspruch 1, **dadurch gekennzeichnet, dass** die Höhenverstelleinrichtung (17) einen Antrieb (18) umfasst, der im Eingriff eine kraftschlüssige Verbindung zwischen dem Rahmen (3) des Lagertechnikfahrzeugs (1) und dem Fahrerplatzmodul (10) herstellt.

3. Lagertechnikfahrzeug nach Anspruch 2, **dadurch gekennzeichnet, dass** der Antrieb (18) einen Aktuator (19), insbesondere eine ausfahrbare Kolbenstange, aufweist, der im Eingriff das Fahrerplatzmodul (10) in Richtung auf den Boden drückt.

4. Lagertechnikfahrzeug nach Anspruch 3, **dadurch gekennzeichnet, dass** der Antrieb (18) am Rahmen (3) befestigt ist und der Aktuator (19) im aktivierten Zustand mit einem Abstützelement (20) in Wirkverbindung gelangt, das am Fahrerplatzmodul (10) befestigt ist.

5. Lagertechnikfahrzeug nach einem der Ansprüche 2 bis 4, **dadurch gekennzeichnet, dass** der Antrieb (18) als Linearantrieb ausgebildet ist.

6. Lagertechnikfahrzeug nach einem der Ansprüche 2 bis 4, **dadurch gekennzeichnet, dass** der Antrieb (18) als Exzenterantrieb ausgebildet ist.

7. Lagertechnikfahrzeug nach einem der Ansprüche 2 bis 6, **dadurch gekennzeichnet, dass** der Antrieb (18) als hydraulischer Antrieb ausgebildet ist.

8. Lagertechnikfahrzeug nach einem der Ansprüche 1 bis 7, **dadurch gekennzeichnet, dass** die Höhenverstelleinrichtung (17) mit einer Bedieneinrichtung (12) im Bereich des Fahrerplatzmoduls (10) in Wirkverbindung steht.

9. Lagertechnikfahrzeug nach einem der Ansprüche 1 bis 7, **dadurch gekennzeichnet, dass** die Höhenverstelleinrichtung (17) mit einer Steuerungseinrichtung in Wirkverbindung steht, die dazu eingerichtet ist, im Stillstand des Lagertechnikfahrzeugs (1) automatisch einen Steuerungsbefehl an die Höhenverstelleinrichtung (17) auszugeben, die Bodenfreiheit zu verringern.

10. Lagertechnikfahrzeug nach Anspruch 9, **dadurch gekennzeichnet, dass** die Steuerungseinrichtung in eine Fahrzeugsteuerung integriert ist.

11. Lagertechnikfahrzeug nach einem der Ansprüche 1 bis 10, **dadurch gekennzeichnet, dass** das Fahrerplatzmodul (10) mittels einer Doppellenkerführung (15), insbesondere einer Parallelogrammaufhängung (15), an dem Rahmen (3) aufgehängt ist und die Feder- und/oder Dämpfereinrichtung (16) zwischen dem Fahrerplatzmodul (10) und dem Rahmen (3) angeordnet ist.

12. Lagertechnikfahrzeug nach einem der Ansprüche 1 bis 11, **dadurch gekennzeichnet, dass** der Rahmen (3) von einem Antriebsteil (2) des Lagertechnikfahrzeugs (1) gebildet ist, wobei an den Seitenteilen des Antriebsteils (2) jeweils eine Doppellenkerführung (15), insbesondere eine Parallelogrammaufhängung (15), angeordnet ist.

13. Lagertechnikfahrzeug nach einem der Ansprüche 1 bis 12, **dadurch gekennzeichnet, dass** die Fahrerstandplattform (11) an dem Fahrerplatzmodul (10) fest angeordnet ist.

14. Lagertechnikfahrzeug nach einem der Ansprüche 1 bis 12, **dadurch gekennzeichnet, dass** die Fahrerstandplattform (11) an dem Fahrerplatzmodul (10) um eine im Wesentlichen horizontale Schwenkachse klappbar angeordnet ist.

15. Lagertechnikfahrzeug nach einem der Ansprüche 1 bis 14, **dadurch gekennzeichnet, dass** das Fahrerplatzmodul (10) eine Fahrbedieneinrichtung (8), insbesondere einer Lenkereinrichtung oder einer Lenkdeichsel, und/oder eine Anlehnhilfe für den Fahrer aufweist.

16. Lagertechnikfahrzeug nach einem der Ansprüche 1 bis 15, **dadurch gekennzeichnet, dass** die Feder- und/oder Dämpfereinrichtung (16) von zumindest einer Feder oder einem Gummielement oder einem Kunststoffelement oder einem Luftfederelement oder einem Silikonelement gebildet ist.

## Claims

1. Warehouse technology vehicle, in particular lifting truck, with a driver's position module which comprises a driver's station platform and is suspended on a frame of the warehouse technology vehicle in a vertically movable manner, wherein at least one spring and/or damper device is arranged between the driver's position module and the frame, which spring and/or damper device makes an elastic suspension of the driver's position module with a variable ground clearance possible, **characterized in that** a height adjustment device (17) is provided with an engagement option into the elastic suspension, which engagement option actively reduces the ground clearance when in engagement.

2. Warehouse technology vehicle according to Claim 1, **characterized in that** the height adjustment device (17) comprises a drive (18) which, when in engagement, establishes a non-positive connection between the frame (3) of the warehouse technology vehicle (1) and the driver's position module (10).

3. Warehouse technology vehicle according to Claim 2, **characterized in that** the drive (18) has an actuator (19), in particular an extendable piston rod, which, when in engagement, presses the driver's position module (10) in the direction of the ground.

4. Warehouse technology vehicle according to Claim 3, **characterized in that** the drive (18) is fastened to the frame (3), and the actuator (19), in the activated state, passes into an operative connection with a supporting element (20) which is fastened to the driver's position module (10).

5. Warehouse technology vehicle according to one of Claims 2 to 4, **characterized in that** the drive (18) is configured as a linear drive.

6. Warehouse technology vehicle according to one of Claims 2 to 4, **characterized in that** the drive (18) is configured as an eccentric drive.

7. Warehouse technology vehicle according to one of Claims 2 to 6, **characterized in that** the drive (18) is configured as a hydraulic drive.

8. Warehouse technology vehicle according to one of Claims 1 to 7, **characterized in that** the height adjustment device (17) is in an operative connection with an operating device (12) in the region of the driver's position module (10).

9. Warehouse technology vehicle according to one of Claims 1 to 7, **characterized in that** the height adjustment device (17) is in an operative connection with a control device which is set up to automatically output a control command to the height adjustment device (17) to decrease the ground clearance at a standstill of the warehouse technology vehicle (1).

10. Warehouse technology vehicle according to Claim 9, **characterized in that** the control device is integrated into a vehicle controller.

11. Warehouse technology vehicle according to one of Claims 1 to 10, **characterized in that** the driver's position module (10) is suspended on the frame (3) by means of a double link guide (15), in particular a parallelogram suspension system (15), and the spring and/or damper device (16) is arranged between the driver's position module (10) and the frame (3).

12. Warehouse technology vehicle according to one of Claims 1 to 11, **characterized in that** the frame (3) is formed by a drive part (2) of the warehouse technology vehicle (1), wherein a double link guide (15), in particular a parallelogram suspension system (15), is arranged in each case on the side parts of the drive part (2) .

13. Warehouse technology vehicle according to one of Claims 1 to 12, **characterized in that** the driver's station platform (11) is arranged fixedly on the driver's position module (10).

14. Warehouse technology vehicle according to one of Claims 1 to 12, **characterized in that** the driver's station platform (11) is arranged on the driver's position module (10) such that it can be folded about a substantially horizontal pivot axis.

15. Warehouse technology vehicle according to one of Claims 1 to 14, **characterized in that** the driver's position module (10) has a travel operating device (8), in particular a handlebar device or a steering drawbar, and/or a leaning aid for the driver.

16. Warehouse technology vehicle according to one of Claims 1 to 15, **characterized in that** the spring and/or damper device (16) is formed by at least one spring or a rubber element or a plastic element or an air spring element or a silicone element.

## Revendications

1. Véhicule de technique d'entreposage, en particulier chariot élévateur, comprenant un module de poste de conduite comprenant une plate-forme de station debout qui est accroché de manière mobile verticalement sur un châssis du véhicule de technique d'entreposage, au moins un système de ressort et/ou d'amortisseur étant disposé entre le module de poste de conduite et le châssis, lequel permet une suspension élastique du module de poste de conduite avec une garde au sol variable, **caractérisé en ce qu'**un système de réglage en hauteur (17) avec une possibilité d'engagement dans la suspension élastique est prévu, lequel réduit activement la garde au sol lorsqu'il est engagé.

2. Véhicule de technique d'entreposage selon la revendication 1, **caractérisé en ce que** le système de réglage en hauteur (17) comprend un entraînement (18) qui, lorsqu'il est engagé, établit une liaison par engagement par force entre le châssis (3) du véhicule de technique d'entreposage (1) et le module de poste de conduite (10).

3. Véhicule de technique d'entreposage selon la revendication 2, **caractérisé en ce que** l'entraînement (18) présente un actionneur (19), en particulier une tige de piston pouvant être sortie, qui, lorsqu'il est engagé, pousse le module de poste de conduite (10) dans la direction du sol.

4. Véhicule de technique d'entreposage selon la revendication 3, **caractérisé en ce que** l'entraînement (18) est fixé au châssis (3) et l'actionneur (19), dans l'état activé, parvient en liaison fonctionnelle avec un élément d'appui (20) qui est fixé au module de poste de conduite (10).

5. Véhicule de technique d'entreposage selon l'une quelconque des revendications 2 à 4, **caractérisé en ce que** l'entraînement (18) est réalisé sous forme d'entraînement linéaire.

6. Véhicule de technique d'entreposage selon l'une quelconque des revendications 2 à 4, **caractérisé en ce que** l'entraînement (18) est réalisé sous forme d'entraînement à excentrique.

7. Véhicule de technique d'entreposage selon l'une quelconque des revendications 2 à 6, **caractérisé en ce que** l'entraînement (18) est réalisé sous forme d'entraînement hydraulique.

8. Véhicule de technique d'entreposage selon l'une quelconque des revendications 1 à 7, **caractérisé en ce que** le système de réglage en hauteur (17) est en liaison fonctionnelle avec un système d'actionnement (12) dans la région du module de poste de conduite (10) .

9. Véhicule de technique d'entreposage selon l'une quelconque des revendications 1 à 7, **caractérisé en ce que** le système de réglage en hauteur (17) est en liaison fonctionnelle avec un système de commande qui est prévu pour envoyer automatiquement, à l'arrêt du véhicule de technique d'entreposage (1), un ordre de commande au système de réglage en hauteur (17) pour réduire la garde au sol.

10. Véhicule de technique d'entreposage selon la revendication 9, **caractérisé en ce que** le système de commande est intégré dans une commande du véhicule.

11. Véhicule de technique d'entreposage selon l'une quelconque des revendications 1 à 10, **caractérisé en ce que** le module de poste de conduite (10) est suspendu au châssis (3) au moyen d'un guide à double bras oscillants (15), en particulier d'une suspension à parallélogramme (15), et le système de ressort et/ou d'amortisseur (16) est disposé entre le module de poste de conduite (10) et le châssis (3).

12. Véhicule de technique d'entreposage selon l'une quelconque des revendications 1 à 11, **caractérisé en ce que** le châssis (3) est formé par une partie d'entraînement (2) du véhicule de technique d'entreposage (1), un guide à double bras oscillants (15), en particulier une suspension à parallélogramme (15), étant disposé à chaque fois au niveau des parties latérales de la partie d'entraînement (2).

13. Véhicule de technique d'entreposage selon l'une quelconque des revendications 1 à 12, **caractérisé en ce que** la plate-forme de station debout (11) est disposée fixement sur le module de poste de conduite (10).

14. Véhicule de technique d'entreposage selon l'une quelconque des revendications 1 à 12, **caractérisé en ce que** la plate-forme de station debout (11) est disposée sur le module de poste de conduite (10) de manière à pouvoir être rabattue autour d'un axe de pivotement essentiellement horizontal.

15. Véhicule de technique d'entreposage selon l'une quelconque des revendications 1 à 14, **caractérisé en ce que** le module de poste de conduite (10) présente un système de commande de conduite (8), en particulier un système de guidon ou un timon de direction, et/ou un organe d'appui pour le conducteur.

16. Véhicule de technique d'entreposage selon l'une quelconque des revendications 1 à 15, **caractérisé en ce que** le système de ressort et/ou d'amortisseur (16) est formé par au moins un ressort ou un élément en caoutchouc ou un élément en plastique ou un élément de ressort pneumatique ou un élément en silicone.
